# FASCICULE DE BREVET EUROPEEN

(11) **EP 3 053 243 B1**
(45) Date de publication et mention de la délivrance du brevet: **21.11.2018**
(21) Numéro de dépôt: 14780526.1
(22) Date de dépôt: 03.10.2014
(51) Int. Cl.: H02J 3/38, H02J 7/35

(54) **INSTALLATION ÉLECTRIQUEMENT AUTONOME ET PROCÉDÉ DE GESTION**
ELEKTRISCH AUTONOME ANLAGE UND VERFAHREN ZUR VERWALTUNG
ELECTRICALLY AUTONOMOUS INSTALLATION AND METHOD OF MANAGEMENT

(30) Priorité: 04.10.2013 FR 1359656
(43) Date de publication de la demande: 10.08.2016
(73) Titulaire: Blue Solutions, 29500 Ergué Gabéric (FR)
(72) Inventeur: COLIN, Jacques, 29000 Quimper (FR); SELLIN, Christian, 29900 Concarneau (FR); LE PAVEN, Yvon, 29500 Ergue Gaberic (FR); CARON, Jean, Saint Eugene de Grantham, Quebec (CA); ETIENNE, Pierre-Luc, Saint-Constant, Quebec (CA); FLORIMOND, Valéry, Montreal, Quebec HIK 262 (CA); SAMMOUDA, Karim, Chambly, Quebec J3L 5N8 (CA); VALLEE, Alain, Varennes, Quebec (CA)
(74) Mandataire: Regimbeau
(86) Numéro de dépôt international: PCT/EP2014/071267
(87) Numéro de publication internationale: WO 2015/049381

(56) Documents cités:
- EP-A2- 2 009 763
- WO-A1-2008/138016
- DE-A1-102010 017 264
- DE-A1-102012 202 465
- DE-U1-202013 101 180
- US-A1- 2006 065 597

## Description

La présente invention a pour objet une installation apte à être électriquement autonome, une telle installation comprenant au moins un bâtiment.

On connaît déjà des bâtiments électriquement autonomes. De tels bâtiments ont en effet pu d'ores et déjà se développer depuis quelques années grâce à des moyens de génération d'énergie à partir d'une source naturelle (solaire, éolienne, etc.) de plus en plus performants. Ils comprennent généralement des moyens de stockage de l'énergie produite.

Ces bâtiments sont toutefois généralement situés dans des endroits où ils ont la possibilité d'avoir accès à un réseau électrique, ce qui leur permet d'avoir tout de même accès au confort électrique lorsque ses moyens de génération d'électricité propres ne sont pas suffisamment performants.

Le document EP 2009763 divulgue un exemple d'un tel système connu. Plus précisément le document EP 2009763 divulgue un système comprenant une alimentation électrique principale formée par exemple d'un réseau électrique, une alimentation auxiliaire autonome comportant une source d'énergie propre, par exemple des panneaux photovoltaïques, et des moyens de stockage de l'énergie électrique provenant de cette source, et des moyens de commutation d'une charge entre l'alimentation électrique principale et l'alimentation auxiliaire autonome, selon des critères préétablis.

On recherche avec l'invention à concevoir une installation qui peut être mise en place dans un environnement dans lequel aucun réseau électrique n'existe, afin de pouvoir apporter un minimum de confort à la population locale.

Une difficulté liée à une telle installation est que l'énergie électrique disponible est susceptible d'être limitée en fonction notamment des conditions climatiques qui ne peuvent être régulées en fonction des besoins de la population.

On cherche donc dans le cadre de l'invention à mettre au point une installation dans laquelle on offre le maximum de confort électrique à la population lorsque cela est possible tout en gérant et économisant l'énergie lorsque cela est nécessaire.

A cet effet, l'invention a pour objet une Installation telle que définie en revendication 1 annexée.

Ainsi, l'installation selon l'invention permet de mettre en place dans des zones isolées des bâtiments collectifs pour améliorer la vie d'une communauté tels qu'une école ou un dispensaire, équipé de tous les objets nécessaires et de lui ajouter une borne d'électricité permettant aux personnes extérieures au bâtiment d'utiliser ponctuellement des appareils électriques à l'aide de l'énergie produite par l'installation si les conditions le permettent.

Toutefois, cette borne d'électricité n'est alimentée en courant que si l'énergie électrique disponible est suffisante pour alimenter le bâtiment en énergie. On s'assure ainsi que les fonctions de base de l'installation sont remplies à tout instant et on permet la mise en place des fonctions supplémentaires lorsque les conditions de génération d'énergie électrique sont bonnes.

Une telle installation est très avantageuse puisqu'elle permet de gérer au mieux l'énergie électrique qui est à disposition de la communauté.

L'installation selon l'invention peut également comprendre l'une ou plusieurs caractéristiques de la liste suivante :
- les moyens de stockage d'énergie comprennent une pluralité d'ensembles de stockage d'énergie en parallèle, les moyens de mesure étant aptes à mesurer un paramètre relatif à l'énergie stockée dans chaque ensemble de stockage. L'installation comporte de préférence en outre des moyens de détermination de l'énergie stockée dans une pluralité ou la totalité des ensembles. Ainsi, l'utilisation de deux ensembles de stockage distincts en parallèle permet d'améliorer la sécurité du réseau électrique et l'accès à l'électricité du bâtiment. En effet, si l'un des ensembles ne fonctionne plus correctement, on peut de cette façon utiliser le ou les autres ensembles, au moins pour alimenter les appareils effectuant les fonctions les plus essentielles, en attendant que la maintenance sur cet ensemble soit effectuée sur l'ensemble défectueux,
- les moyens de stockage comprennent au moins un module de batterie, notamment une batterie de type lithium-métal-polymère, dans laquelle l'électrolyte est sous forme solide. Ce type de batterie, ayant une durée de vie importante et une sécurité améliorée, est en effet particulièrement avantageux,
- l'installation comprend une pluralité de sous-installation, chaque sous-installation comportant un sous-groupe distinct de moyens de génération d'énergie et le cas échéant de moyens de stockage d'énergie, chaque installation étant de préférence reliée électriquement à au moins un éléments à alimenter ou une portion d'élément à alimenter que n'alimente pas au moins une autre sous-installation. Une sous-installation peut par exemple être reliée à une portion du bâtiment, une autre des sous-installation étant reliée à une autre portion dudit bâtiment. Les sous-installations peuvent également être reliées à des éléments à alimenter en commun, telle la borne de distribution ou chacun à des éléments à alimenter autres que le bâtiment différents. On peut également envisager que chacune des sous-installations soit reliée à des éléments à alimenter distincts,
- au moins deux sous-installations sont chacune reliées électriquement à une portion distincte du bâtiment, l'une au moins des sous-installations étant également reliée à au moins un autre élément à alimenter outre le bâtiment, ladite sous-installation (ou chacune des sous-installations concernées) comprenant :
   - des moyens d'interconnexion des moyens de stockage et/ou des moyens de génération de ladite sous-installation aux éléments à alimenter ;
   - des moyens de mesure d'au moins un paramètre relatif à l'énergie stockée dans les moyens de stockage d'énergie de ladite sous-installation, et
   - des moyens de commande des moyens d'interconnexion en fonction des valeurs obtenues par les moyens de mesure, de sorte que si l'énergie stockée dans les moyens de stockage de ladite sous-installation est inférieure à une valeur de seuil, on interdit l'alimentation électrique d'au moins l'un des éléments relié à ladite sous-installation autre que le bâtiment.
- au moins un moyen d'interconnexion de sécurité est configuré pour que lorsqu'il est activé, l'énergie provenant des moyens de génération d'une première sous-installation alimente l'élément ou la portion d'élément à alimenter propre à une deuxième sous-installation. Le moyen d'interconnexion de sécurité permet notamment de relier électriquement un chargeur d'une sous-installation aux moyens de stockage des deux sous-installations ou les moyens de stockage d'une sous-installation aux éléments à alimenter ou portions d'éléments à alimenter propres aux deux sous-installations,
- l'installation comprend également une pluralité d'éléments à alimenter outre le bâtiment et des moyens de mesure d'au moins un paramètre relatif à la puissance demandée par chacun de ces éléments à alimenter, et des moyens de détermination de l'élément parmi les éléments autres que le bâtiment dont on interdit l'alimentation en fonction des valeurs obtenues par lesdits moyens de mesure. On peut ainsi interdire ou cesser l'alimentation de l'élément non prioritaire le plus consommateur d'énergie,
- lorsque l'énergie stockée est considérée comme inférieure à la valeur de seuil, on peut alternativement déconnecter les éléments dans un ordre prédéterminé selon leur utilité pour la communauté,
- les moyens de génération d'énergie comportent au moins un panneau photovoltaïque apte à convertir le rayonnement solaire en énergie électrique. Ces moyens de génération d'énergie peuvent également comporter une éolienne, une hydrolienne, etc. Les moyens de génération peuvent bien entendu comprendre plusieurs éléments de génération d'énergie de même nature ou de nature différente, en série et/ou en parallèle,
- au moins l'un des panneaux photovoltaïques, de préférence la totalité des panneaux photovoltaïques est placée sur le toit du bâtiment afin d'éviter l'utilisation d'une structure supplémentaire, et de maximiser l'exposition de ces panneaux tout en évitant également le vandalisme ou la casse non intentionnelle. Le bâtiment comprend alors notamment un toit à un unique pan et l'orientation (sud ou nord en fonction de l'hémisphère) et éventuellement l'inclinaison du toit (en fonction de la latitude) est choisie pour optimiser le fonctionnement des panneaux photovoltaïques,
- la surface des panneaux photovoltaïques et notamment du toit est choisie pour que les panneaux photovoltaïques puissent alimenter le bâtiment en électricité pendant 24 heures sans interruption. Autrement dit, les panneaux peuvent fournir plus de 60kWh, et notamment environ 80 kWh, en une journée d'ensoleillement. La surface prévue de panneaux et notamment du toit est donc supérieure à 100m² et notamment 120 m²,
- au moins un chargeur comportant un convertisseur de courant est placé en aval des moyens de génération d'énergie, et notamment interposé entre les moyens de génération d'énergie et les moyens de stockage d'énergie. Ce chargeur peut comprendre un convertisseur de courant continu, notamment en aval des panneaux photovoltaïques générant un courant continu ou un convertisseur de courant alternatif-continu, par exemple en aval d'une éolienne générant un courant alternatif. Ce chargeur comprend de préférence la fonction MPPT (acronyme de Maximum Power Point Tracking). Cette opération a pour objectif de rechercher le point de puissance maximale des moyens de génération formé par les panneaux photovoltaïques, du fait que ceux-ci sont non linéaires, c'est-à-dire que pour un même éclairement, la puissance délivrée par ces panneaux est différente selon la tension choisie. Un chargeur peut être placé en sortie d'un panneau ou d'une pluralité de panneaux placés en série et/ou en parallèle,
- un convertisseur courant continu/alternatif (ou onduleur) est placé entre les moyens de génération d'énergie et les éléments à alimenter, notamment en sortie des moyens de stockage d'énergie, afin de transformer le courant stocké dans les moyens de stockage d'énergie sous forme continue en un courant distribué sous forme alternative, auquel sont adaptés les appareils électriques du commerce qui sont susceptibles de se trouver dans le bâtiment. Un tel convertisseur peut notamment être placé en sortie de chacun des ensembles de stockage d'énergie,
- les moyens de génération d'énergie sont reliés à la fois aux moyens de stockage d'énergie et directement à au moins l'un des éléments à alimenter et notamment au bâtiment. En effet, cela permet de satisfaire directement les besoins du bâtiment sans perte d'énergie superflue (pertes, mêmes minimes, qui se produisent forcément lorsque l'on charge et décharge les moyens de stockage d'énergie). L'énergie générée est également disponible immédiatement de cette façon,
- l'installation peut être également reliée à un autre moyen d'alimentation de secours, tel qu'un groupe électrogène ou un réseau de distribution, destiné à alimenter au moins l'un des éléments à alimenter et/ou les moyens de stockage d'énergie. Dans le cas où l'installation comprend un tel moyen d'alimentation de secours, l'installation peut comprendre un redresseur interposé entre au moins le moyen d'alimentation et les moyens de stockage d'énergie soit au moins un ensemble de stockage pour pouvoir stocker (sous forme continue) dans ces moyens l'énergie obtenue depuis le moyen d'alimentation (sous forme alternative),
- la borne de distribution d'électricité comprend un moyen de détection de connexion de la présence d'un appareil électrique aux moyens de connexion de la borne, et des moyens de commande des moyens d'interconnexion interposés entre la borne et les moyens de stockage d'énergie en fonction des moyens de détection. On assure ainsi la sécurité de la borne de distribution d'électricité, aucun courant ne circulant dans cette borne si aucun appareil n'est connecté à celle-ci,
- la borne peut comprendre un module d'identification et/ou un module de paiement. Un module d'identification, à l'aide notamment d'une carte telle qu'une carte RFID ou à code-barres ou à bande magnétique, renforcée éventuellement par une identification par code personnel, permet que le service ne soit utilisé que par les membres autorisés. La borne pourrait également être utilisée par toute personne (ou toute personne qui le souhaite) à l'aide du module de paiement. Un tel module est notamment un module de paiement classique par carte bancaire ou par carte de prépaiement ou par le biais d'un collecteur de pièces ou de billets. Dans ce cas, les moyens de commande peuvent commander les moyens d'interconnexion interposés entre la borne et les moyens de stockage d'énergie en fonction des modules d'identification et/ou de paiement. L'énergie électrique est en effet délivrée uniquement si un utilisateur identifié branche un appareil ou si un utilisateur a payé le service. Alternativement, la borne peut comprendre des moyens d'accès mobiles entre une position de fermeture permettant d'obturer l'accès aux moyens de connexion, et une position d'ouverture permettant de libérer l'accès aux moyens de connexion, et des moyens de commande des moyens d'accès en fonction du module d'identification et/ou du moyen de paiement. Dans le cas où la borne comprend un module de paiement, elle peut également comprendre un compteur de l'énergie fournie à chacun des moyens de connexion, le compteur interagissant avec les moyens de paiement afin que l'un de ce deux organes commande les moyens d'interconnexion et ainsi l'interruption de la délivrance d'électricité une fois la somme payée d'avance consommée. Bien entendu, la borne peut également être en accès libre.
- l'accès ou la délivrance de courant dans un moyen de connexion peut également être commandée en fonction du paramètre relatif à la puissance mesuré en sortie des moyens de stockage d'énergie. Autrement dit, l'installation comprend des moyens de commande des moyens d'interconnexion ou d'accès relativement à au moins un moyen de connexion de la borne en fonction du paramètre relatif à l'énergie disponible dans les moyens de stockage d'énergie. De cette façon, on n'autorise pas la délivrance de courant à un nouvel appareil externe si on détecte que les ensembles de stockage sont proches de leur niveau de charge limite,
- un autre élément à alimenter de l'installation est une unité de traitement d'eau tel qu'un élément de purification d'eau et/ou de désalinisation d'eau de mer. D'autres éléments ou plusieurs éléments de même nature peuvent bien entendu être ajoutés à l'installation. L'unité de traitement d'eau comprend notamment un canal de sortie de fluide connecté au bâtiment et est destiné à alimenter ce dernier en eau. Il peut également être relié à une borne de distribution de liquide située à l'extérieur du bâtiment et comprenant des moyens de sortie de liquide tels qu'un robinet. On peut alors mettre à disposition de tous en plus de l'électricité, de l'eau.
- la borne de distribution de liquide peut également comprendre un module d'identification et/ou un module de paiement et éventuellement des moyens d'accès mobiles entre une position de fermeture permettant d'obturer l'accès aux moyens de sortie, et une position d'ouverture permettant de libérer l'accès aux moyens de sortie, et des moyens de commande des moyens d'accès en fonction du module d'identification et/ou du moyen de paiement. Comme pour la borne de distribution d'électricité, la borne de distribution d'eau n'est alors accessible qu'aux personnes qui sont autorisées ou qui souhaitent payer, ce qui évite un gaspillage de la denrée rare,
- l'installation peut également comprendre comprenant des moyens d'ouverture et de fermeture d'au moins un canal de fluide, telle qu'au moins une valve, et des moyens de commande des moyens d'ouverture et de fermeture en fonction d'au moins un paramètre, de sorte que seule le bâtiment soit alimenté en eau lorsque la valeur du paramètre est hors d'une certaine fourchette de valeurs de seuil. Le paramètre peut notamment être un débit d'eau demandée par le bâtiment (accès à la borne refusé s'il est supérieur à une valeur de seuil) ou une quantité d'eau traitée disponible (accès à la borne refusé si elle est inférieure à une valeur de seuil).

L'invention a également pour objet un procédé de gestion d'une installation tel que défini dans le jeu de revendications annexé.

On va maintenant décrire un exemple non limitatif de réalisation de l'installation selon l'invention, à l'aide des dessins dans lesquels :
- la figure 1 est une vue schématique de l'installation selon un mode particulier de réalisation de l'invention,
- la figure 2 est un schéma simplifié de l'agencement électrique d'une installation selon un mode de réalisation de l'invention,
- la figure 3 est un diagramme d'un procédé de commande mis en oeuvre dans le circuit électrique de la figure 2,
- la figure 4 est un schéma simplifié de l'agencement électrique d'une variante de l'installation selon le mode de réalisation de la figure 2,
- la figure 5 est un schéma simplifié de l'agencement électrique d'une installation selon un mode de réalisation non conforme à l'invention,

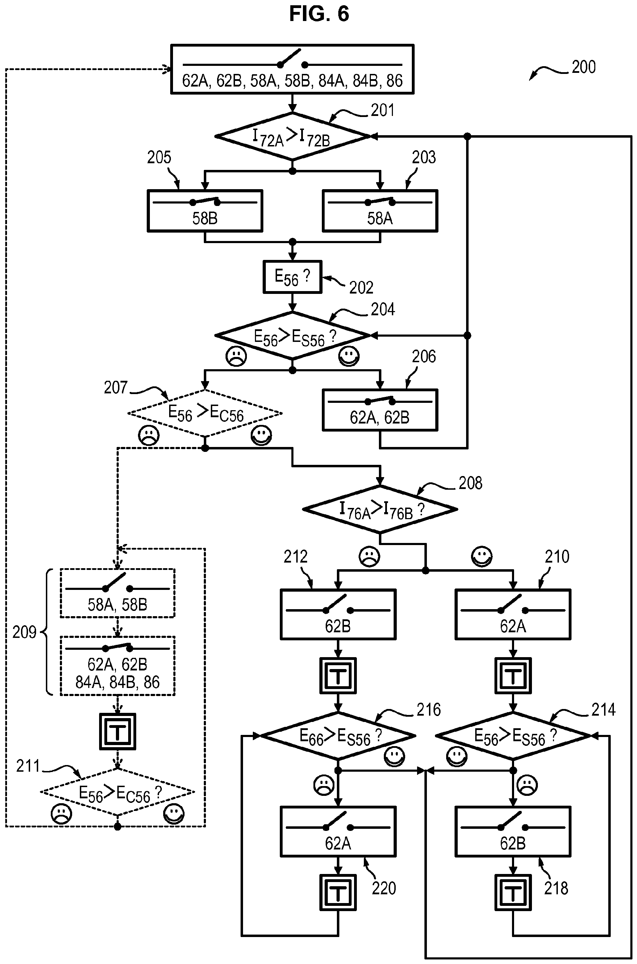

- la figure 6 est un diagramme d'un procédé de commande mis en oeuvre dans le circuit électrique de la figure 5.

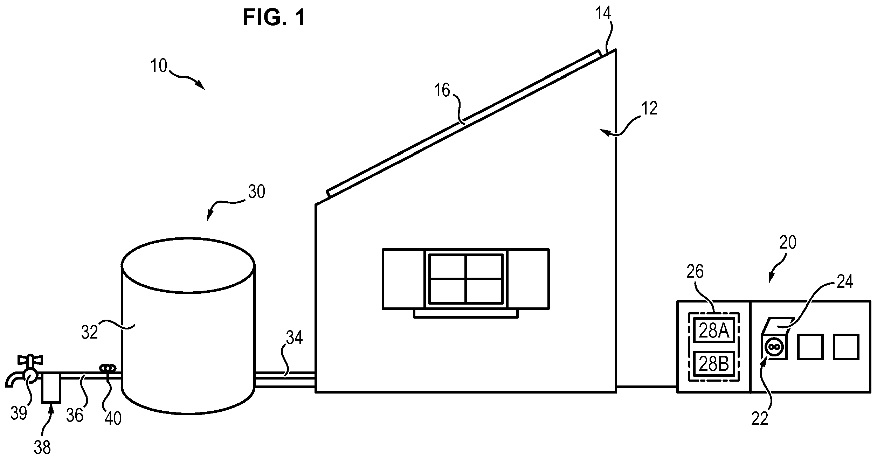

Sur la figure 1, on voit une installation 10 selon un mode de réalisation de l'invention. L'installation comprend tout d'abord un bâtiment 12 destiné généralement à servir de bâtiment de service public dans la communauté où il est installé, par exemple de dispensaire ou d'école. Ce bâtiment comprend un toit 14 sur lequel sont agencés des panneaux photovoltaïques 16 destinés à transformer le rayonnement solaire en énergie électrique. Pour maximiser l'énergie emmagasinée par les panneaux photovoltaïques, le toit 14 comprend un unique pan et est orienté vers le sud dans l'hémisphère nord et vers le nord dans l'hémisphère sud. Son inclinaison peut être étudiée selon le lieu dans lequel l'installation est située pour maximiser l'efficacité des panneaux.

L'installation comprend également, outre le bâtiment 12, une borne de distribution d'électricité 20 connectée au bâtiment 12. Cette borne comprend une pluralité de moyens de connexion 22 permettant la connexion à la borne d'appareils externes tels que des chargeurs de téléphone, des ordinateurs, etc. Sur la figure, on a représenté trois emplacements pour les moyens de connexion. Chacun de ces moyens de connexion est situé dans un logement recouvert par un clapet 24 mobile en rotation entre une position de fermeture dans laquelle il interdit l'accès aux moyens de connexion et une position d'ouverture dans laquelle il autorise l'accès à de tels moyens de connexion. Ce clapet peut être verrouillé en position fermée à l'aide de moyens de verrouillage magnétique notamment. De préférence, le logement est de dimensions suffisamment importantes pour pouvoir y insérer les appareils externes et assurer la sécurité contre le vol de ces appareils lors de leur connexion à la borne.

La borne de distribution d'électricité 20 comprend également une interface de communication avec l'utilisateur 26 comprenant notamment un écran et un clavier de saisie. Elle comporte également un module d'identification 28A (lecteur de code-barres ou RFID) et un module de paiement 28B (module classique de paiement par carte bancaire par exemple). Cette interface 26 permet à l'utilisateur d'interagir avec la borne afin de pouvoir accéder au service de distribution d'électricité.

L'installation comprend également une unité de traitement d'eau 30 également connectée électriquement au bâtiment 12. Cette unité de traitement d'eau permet de purifier ou de désaliniser l'eau non potable à proximité de l'installation. L'unité de traitement d'eau comprend un réservoir 32 apte à stocker l'eau purifiée et des canaux de sortie de fluide 34, 36 menant d'une part au bâtiment 12 pour l'approvisionner en eau et d'autre part vers une borne de distribution d'eau 38 comprenant des moyens de sortie de fluide tels qu'un robinet 39 et permettant aux membres de la communauté dans laquelle est située l'installation de s'approvisionner également en eau si nécessaire. L'installation comprend également une valve 40 pilotée située entre le réservoir 32 et les moyens de sortie de fluide 39 permettant d'autoriser ou non le passage de fluide dans ce canal.

La valve 40 peut être pilotée en fonction d'un paramètre relatif à l'unité de traitement, notamment la quantité d'eau disponible dans le réservoir de sorte que, si la quantité est inférieure à une valeur de seuil, la valve est fermée et l'eau peut n'être distribuée qu'au bâtiment 12. Si la quantité est supérieure à la valeur de seuil, la valve permet en revanche que l'eau soit distribuée en accès libre au robinet 39. Ainsi, l'eau est gardée en priorité pour alimenter le bâtiment.

L'unité de traitement de l'eau 30 a été présentée comme en accès libre, de sorte que le robinet 39 puisse être accessible à toute la communauté. On notera toutefois que ce robinet pourrait être couplé avec des moyens d'identification et de paiement tels que décrits pour la borne de distribution d'électricité, afin que l'accès à la borne soit sélectif. Au contraire, la borne de distribution de l'électricité peut être en accès libre.

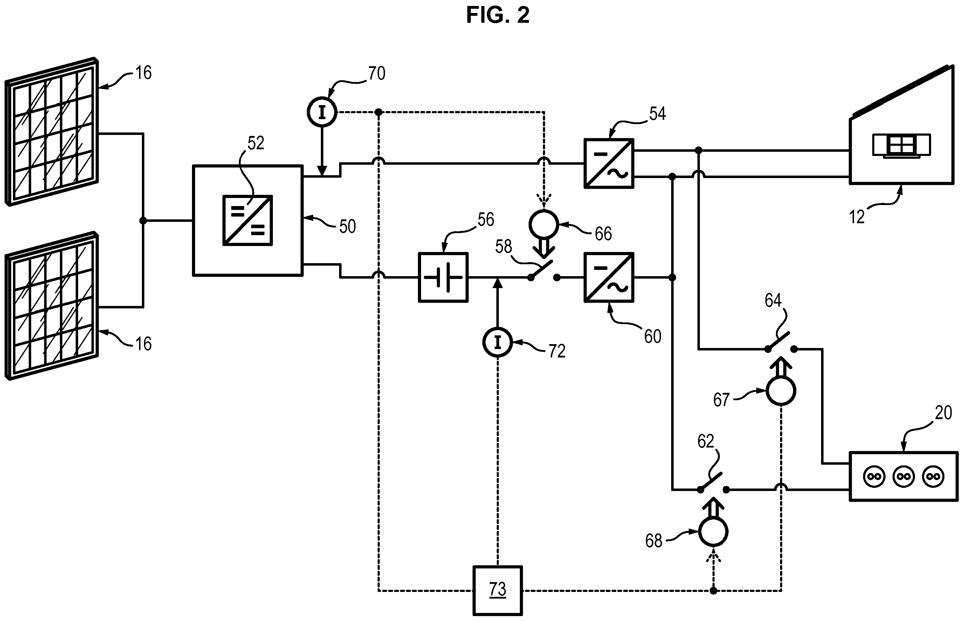

On va maintenant décrire, à l'aide de la figure 2, le fonctionnement d'une installation électriquement autonome comme celle de l'invention. Pour ne pas compliquer inutilement la description et le schéma associé, on a représenté sur le schéma uniquement le bâtiment 12 et la borne de distribution d'électricité 20.

Comme on l'a déjà indiqué, l'énergie électrique servant à alimenter les différents éléments décrits, et notamment le bâtiment 12 et la borne de distribution d'électricité 20 est produite par des panneaux photovoltaïques 16 placés notamment sur le toit du bâtiment et dont deux exemplaires reliés en parallèle sont représentés sur la figure.

Un chargeur 50 comprenant notamment un convertisseur courant continu 52 est placé en aval des panneaux 16 de façon à être connecté à ces deux panneaux. Le convertisseur de courant continu permet d'adapter l'énergie produite en énergie apte à être utilisée par l'installation. De préférence, le chargeur est un chargeur MPPT (Maximum Puissance Point Tracking), à savoir qu'il choisit la tension à laquelle doivent fonctionner les panneaux pour produire la puissance maximale, de tels panneaux constituant des générateurs non linéaires, c'est-à-dire que pour un même éclairement, la puissance délivrée par ces panneaux est différente selon la tension à laquelle ils fonctionnent.

Un mode opératoire non limitatif pour une telle opération MPPT consiste à :
. mesurer la puissance P1 délivrée par les panneaux pour une tension de sortie U1 fixée,
. après un certain temps, imposer une deuxième tension U2 légèrement supérieure à U1, et mesurer la puissance correspondante P2, et
. si P2 est supérieure à P1, chercher à imposer une tension encore plus grande (respectivement plus faible si P2 est inférieur à P1).

Ainsi le chargeur adapte en permanence la tension aux bornes des panneaux photovoltaïques afin de se rapprocher du point de puissance maximum.

En sortie de ce chargeur, on trouve deux branches électriques en parallèle. Une première branche comprend un onduleur 54 en aval duquel sont connectés en parallèle le bâtiment 12 et la borne 20. Entre l'onduleur 54 et la borne de distribution 20, l'installation comprend également des moyens d'interconnexion 64 constitués par un interrupteur et permettant de délivrer ou non du courant à la borne de distribution d'électricité 20, qui n'est pas considérée comme devant être alimentée prioritairement. Cette branche permet d'alimenter directement le bâtiment 12 et éventuellement la borne et de subvenir à ses besoins en temps réel avec l'énergie obtenue des panneaux photovoltaïques 16. L'onduleur 54 permet de transformer l'énergie électrique produite sous forme continue en énergie électrique sous forme alternative, habituellement utilisée par les installations électriques.

La deuxième branche comprend des moyens de stockage d'énergie 56 constitués par un module de batterie comprenant généralement plusieurs cellules de batterie en série. De façon classique, chaque cellule élémentaire comprend une anode et une cathode et un électrolyte permettant le transfert des composés chimiques entre les deux électrodes, de sorte qu'une réduction d'oxydo-réduction se produit dans la cellule. La batterie est de préférence une batterie au lithium et notamment une batterie lithium-métal-polymère présentant un électrolyte sous forme solide lorsque la batterie est au repos. Un tel module de batterie est en effet particulièrement avantageux en termes de sécurité et de durée de vie.

En aval de la batterie, la deuxième branche comprend également des moyens d'interconnexion 58, constitués par un interrupteur, et un onduleur 60. Cette branche est connectée en parallèle et en aval de l'onduleur d'une part au bâtiment 12 et d'autre part à la borne de distribution d'électricité 20. Entre l'onduleur 60 et la borne de distribution 20, l'installation comprend également des moyens d'interconnexion 62 constitués par un interrupteur et permettant de délivrer ou non du courant à la borne de distribution d'électricité 20 par l'intermédiaire du module de batterie.

Le circuit électrique comprend également des moyens de commande 66, 67 et 68 des moyens d'interconnexion respectifs 58, 64, 62. Ces moyens de commande permettent de commander la fermeture ou l'ouverture de l'interrupteur (et donc l'autorisation ou l'interdiction de la délivrance de courant dans la branche concernée) en fonction de paramètres mesurés dans le circuit ou dans d'autres domaines du bâtiment ou de la borne.

Le circuit comprend également des moyens de mesure 70, 72 permettant de mesurer respectivement le courant dans la première branche de sortie du chargeur 50 et le courant de décharge admissible en sortie de la batterie, qui permet d'obtenir une information sur la charge de la batterie et l'énergie que celle-ci peut encore fournir. Ces moyens de mesure 70, 72 sont aptes à communiquer avec les moyens de commande 66, 67, 68 de chacun des interrupteurs 58, 64, 62 qui tiennent compte des données fournies par ces moyens de mesure pour commander les interrupteurs. Plus particulièrement, les moyens de mesure 70 sont destinés à communiquer avec les moyens de commande 66 de l'interrupteur 58 alors que les moyens de mesure 72 sont aptes à communiquer avec les moyens de commande 66, 67, 68 de l'interrupteur 58, 64, 62. Les moyens de mesure 70 peuvent bien entendu être intégrés au chargeur MPPT 50 alors que les moyens de mesure 72 peuvent être intégrés au module de batterie 56.

Une telle installation permet de gérer au mieux l'énergie électrique disponible. En effet, le bâtiment 12 constitue la priorité absolue et l'élément à alimenter en électricité. Ainsi, en sortie du chargeur 50, on envoie l'énergie électrique dans le bâtiment uniquement pour répondre aux besoins électriques immédiats. Le reste de l'énergie disponible est stockée dans la batterie. La borne 20 n'est pas alimentée par cette énergie parce qu'elle n'est pas considérée comme prioritaire, à moins qu'un surplus d'énergie soit disponible.

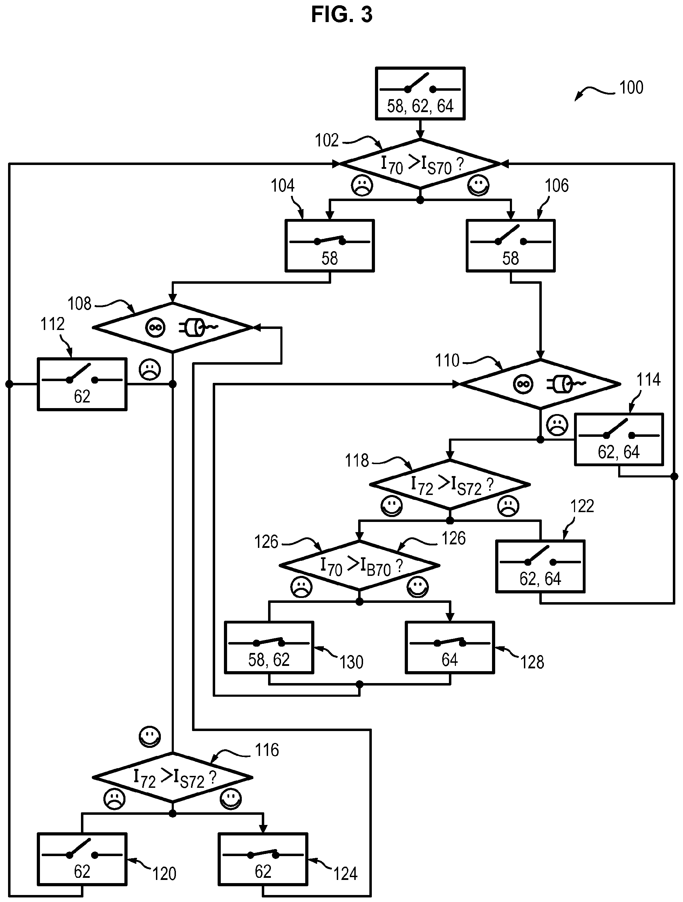

On va maintenant décrire en détails le procédé 100 de fonctionnement de l'installation de ce premier mode de réalisation, à l'aide de la figure 3.

On mesure en temps réel à l'aide des moyens 70 l'intensité du courant dans la première branche du circuit et on compare, lors d'une étape 102 si l'intensité I₇₀ mesurée dans cette branche, à la valeur de seuil I_{S70}. Cette comparaison est effectuée auprès d'une unité de calcul 73 tel qu'un microprocesseur en communication avec les moyens de mesure 70. On notera que l'intensité de seuil I_{S70} peut être une valeur fixe ou bien une valeur relative à une puissance demandée par un ou plusieurs éléments à alimenter, soit une intensité mesurée dans le circuit, notamment dans la branche électrique menant au bâtiment 12.

Lorsque l'on considère que le courant délivré par les panneaux solaires n'est plus suffisant pour alimenter le bâtiment, à savoir lorsque l'on mesure que le courant dans la première branche est inférieur à la valeur de seuil I_{S70}, l'unité de calcul 73 le communique aux moyens de commande 66 de l'interrupteur 58, auxquels elle est reliée, ces moyens commandant la fermeture de l'interrupteur 58 lors de l'étape 104 afin que l'énergie en provenance de la batterie soit apte à alimenter le bâtiment 12. Le module de batterie 56 qui était en mode « charge » passe alors en mode « décharge ». Dans le cas contraire, on commande aux moyens de commande de laisser l'interrupteur 58 ouvert lors d'une étape 106. On pourrait en variante mesurer le courant dans la deuxième branche de courant en amont de la batterie et fermer l'interrupteur 58 dès que le courant dans la branche en amont de la batterie 58 est nul ce qui signifie que toute l'énergie produite par les panneaux solaires est déjà utilisée pour alimenter le bâtiment.

On vérifie ensuite si l'on a détecté (étape 108, respectivement 110) qu'un utilisateur cherchait à connecter un appareil à la borne de distribution d'électricité. Si aucune connexion n'a été détectée, on commande l'ouverture des interrupteurs permettant d'alimenter la borne, 58 et/ou 62 et/ou 64, lors d'une étape 112, respectivement 114.

Si une connexion a en revanche été détectée, on vérifie dans les deux cas, lors d'une étape 116, respectivement 118, si l'intensité de décharge admissible en sortie de la batterie I₇₂ mesurée par les moyens 72 est supérieure à une certaine valeur de seuil I_{S72}, notamment 3,0 V. Cette intensité permet de déduire le niveau de charge de la batterie soit l'énergie stockée dans la batterie de façon connue et l'intensité de seuil correspond donc à une valeur de seuil de l'énergie stockée dans la batterie. Si ce n'est pas le cas, on commande aux moyens de commande 68, lors d'une étape 120, respectivement 122, de laisser les interrupteurs 62 et éventuellement 64 ouverts. Si c'est le cas, on considère en revanche que l'installation stocke suffisamment d'énergie pour alimenter le bâtiment pendant une journée entière et qu'on peut utiliser l'énergie électrique stockée pour la borne.

Dans le cas où la batterie est déjà nécessaire pour l'alimention du bâtiment, on vérifie également, lors d'une étape 126, si l'intensité I₇₀ dans la branche de l'onduleur 54 est supérieure à une deuxième valeur de seuil I_{B70} supérieure à la première valeur de seuil I_{S70}. Si c'est le cas, on utilise cette branche pour alimenter la borne et on commande la fermeture de l'interrupteur 64 à l'aide des moyens 67, lors d'une étape 128. Dans le cas contraire, on doit utiliser le module de batterie pour alimenter la borne 20. On commande alors, lors d'une étape 130, la fermeture des interrupteurs 58, 62 à l'aide des moyens de commande 66, 68. La batterie passe alors du mode « charge » au mode « décharge ». Lors de l'étape 130, on pourrait également commander la fermeture de l'interrupteur 64 pour éviter toute perte d'énergie.

Ce procédé est effectué en permanence en fonction des valeurs mesurées par les moyens de mesure, qui sont envoyés en temps réel au module de calcul 73.

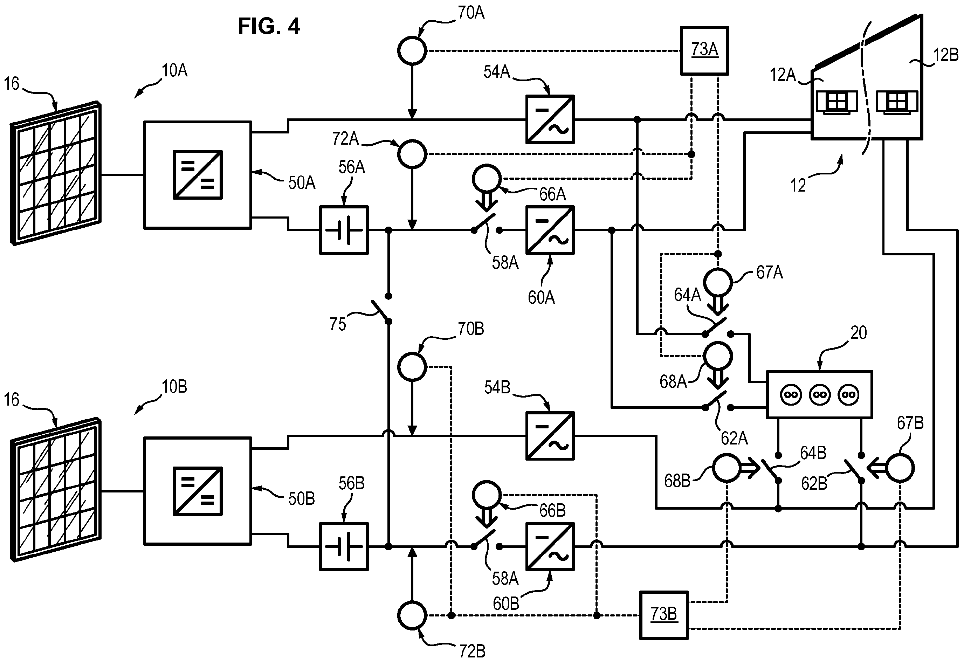

Sur la figure 4, on a représenté une variante d'un circuit électrique d'une installation selon l'invention. Les mêmes organes électriques ont été représentés avec les mêmes références.

Comme on le voit sur cette figure, l'installation comprend deux sous-installations appelées ici demi-réseaux 10A, 10B complètement identiques et également identique à celui qui a été décrit sur la figure 2. Chacun des demi-réseaux 10A, 10B comprend au moins un panneau photovoltaïque 16, un chargeur 50A-50B, une première branche reliée aux éléments à alimenter par le biais d'un onduleur 54A-54B et une deuxième branche comprenant un module de batterie 56A-56B relié également aux éléments à alimenter par le biais d'un onduleur 60A-60B.

Les organes électriques des deux sous-installations sont distincts, à savoir qu'un organe d'une sous-installation n'appartient pas à l'autre des sous-installation.

La différence relativement à l'installation de la figure 2 et chacun des demi-réseaux 10A, 10B est que chaque demi-réseau 10A, 10B alimente une portion distincte 12A, 12B du réseau électrique du bâtiment 12.

Les deux demi-réseaux comportent également chacun des moyens d'interconnexion 58A, 62A, 64A; 58B, 62B, 64B, des moyens de mesure 70A, 72A; 70B, 72B et des moyens de commande 66A, 67A, 68A ; 66B, 67B, 68B des moyens d'interconnexion qui commandent les moyens d'interconnexion relatifs à ce demi-réseau en fonction uniquement des valeurs des mesures effectuées dans ce demi-réseau. Ainsi, les deux demi-réseaux ne sont pas amenés à communiquer et peuvent être totalement indépendant l'un de l'autre, ce qui amène une sécurité accrue.

Toutefois, on notera également que les deux demi-réseaux sont reliés par une branche transversale comprenant un interrupteur de sécurité 75 reliant les deux modules de batteries 56A, 56B. Cet interrupteur peut être activé manuellement en cas de défaillance de l'un des demi-réseaux. Dans ce cas, en cas de défaillance de l'un des chargeurs, les deux batteries sont en série et peuvent être chargées par les panneaux photovoltaïques d'un même demi-réseau lorsqu'elles sont en mode « charge ». Si l'une des batteries est défaillante, on peut également grâce à cet interrupteur alimenter la totalité du bâtiment à l'aide de l'énergie stockée dans l'un seul de ces modules de batteries lorsque ce dernier est en mode « décharge ». L'interrupteur 75 pourrait bien entendu également être commandé automatiquement en fonction de différents paramètres mesurés au lieu de manuellement.

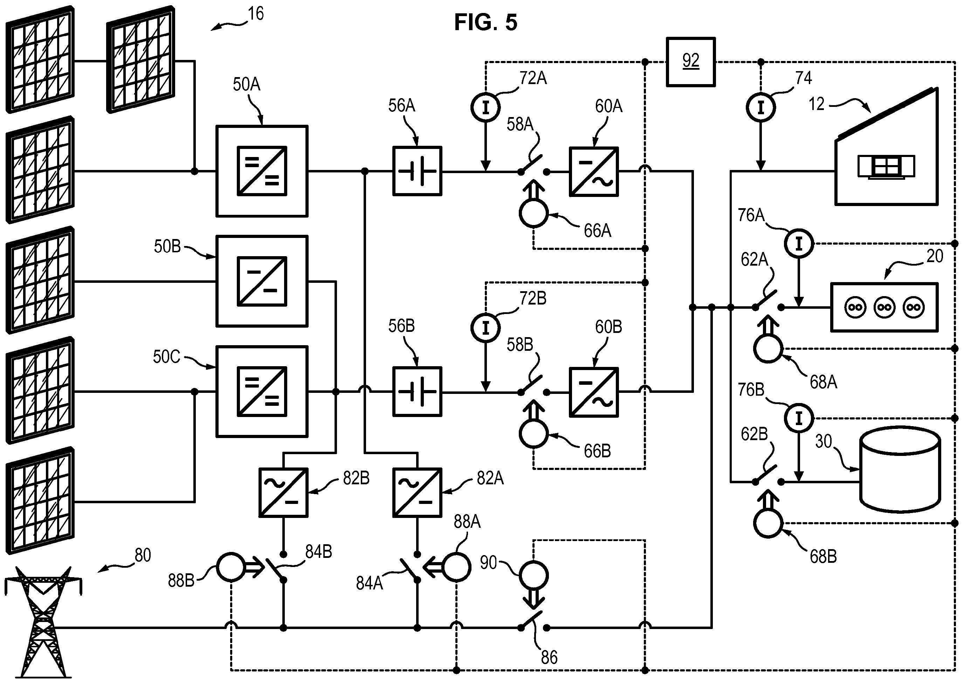

Sur la figure 5, on a représenté un autre mode de réalisation d'une installation non conforme à l'invention. Les mêmes organes électriques ont été représentés avec les mêmes références.

Sur cette figure, on montre que les panneaux photovoltaïques 16 peuvent être arrangés de multiples façons en amont des chargeurs 50. On a représenté sur la figure trois chargeurs 50A, 50B et 50C, le chargeur 50A étant reliés à deux panneaux en série, en parallèle avec un autre panneau. Le chargeur 50B est lui relié à un unique panneau alors que le chargeur 50C est relié à deux panneaux en parallèle comme sur la figure 2. De préférence, l'installation est toutefois symétrique à savoir que chaque chargeur est relié au même nombre et agencement de panneaux.

Le circuit de la figure 5 comprend également deux modules de batteries 56A, 56B au lieu d'un unique module comme sur la figure 2. Ces modules de batteries sont situés sur des branches électriques en parallèle. En particulier, le premier module de batterie 56A est situé en aval chargeur 50A alors que le deuxième module de batterie 56B est situé en aval des chargeurs 50B et 50C. Les modules de batterie 56A, 56B peuvent en effet être reliés à n'importe quel nombre de chargeur en parallèle. De même que précédemment, il est préférable que l'installation soit symétrique et que chacun des modules de batterie soit relié au même nombre de chargeurs.

Les deux modules de batteries reçoivent là encore leur énergie de panneaux photovoltaïques distincts. Cela permet de créer deux demi-réseaux électriques qui peuvent fonctionner en coopération (en alternance ou en même temps) et d'augmenter la sécurité du réseau puisque si un module de batterie, ou un chargeur associé ne peut plus fonctionner correctement, on peut tout de même approvisionner l'installation en électricité grâce au réseau parallèle comprenant le deuxième module de batterie.

Comme décrit plus haut à la figure 2, des moyens d'interconnexion du type interrupteur 58A, 58B et un onduleur 60A, 60B sont placés en aval de chacun des modules de batterie. Comme à la figure 2 également, chaque branche électrique comprenant un module de batterie est relié aux éléments à alimenter, ici le bâtiment 12, la borne de distribution d'électricité 20 et l'unité de traitement d'eau 30, agencés en parallèle. Des moyens d'interconnexion 62A, 62B sont placés dans les branches électriques respectives destinées à relier la borne de distribution 20 et l'unité de traitement 30.

Contrairement à ce qui a été décrit à la figure 2, on remarque que l'énergie électrique n'est pas dans cet exemple dirigée directement des panneaux photovoltaïques vers les éléments à alimenter. Cette configuration, même si elle est avantageuse, n'est en effet pas obligatoire. En revanche, le circuit électrique comprend une branche électrique supplémentaire reliée à un réseau électrique 80 potentiellement accessible depuis l'installation. A la place du réseau, on pourrait également relier l'installation à un groupe électrogène.

Le réseau électrique 80 est relié d'une part aux éléments à alimenter 12, 20, 30 et d'autre part par le biais de deux autres branches, à chacun des modules de batteries 56A, 56B. Chacune des branches reliant le réseau aux modules de batterie comprend également un redresseur 82A, 82B, un tel redresseur étant un convertisseur alternatif/continu permettant de transformer le courant alternatif provenant du réseau en courant continu apte à être stocké dans les moyens de stockage 56A, 56B, et des moyens d'interconnexion 84A, 84B constitués respectivement par un interrupteur. Des moyens d'interconnexion 86 sont également placés dans cette branche électrique reliée au réseau de façon à connecter ou déconnecter le réseau des éléments à alimenter 12, 20, 30.

Comme dans la figure 2, des moyens de commande sont associés à chacun des interrupteurs. Les moyens de commande 66A, 66B sont associés à chacun des interrupteurs 58A, 58B et des moyens de commande 68A, 68B sont associés aux interrupteurs 62A, 62B. Des moyens de commande 88A, 88B et 90 sont respectivement associés aux interrupteurs 84A, 84B et 86.

Le circuit comprend également des moyens de mesure 72A, 72B, notamment de mesure de l'intensité en sortie de chacun des modules de batteries, ainsi que des moyens de mesure 74 de l'intensité dans la branche électrique au bâtiment et des moyens de mesure 76A, 76B, notamment de l'intensité dans les branches électriques respectives relatives à la borne de distribution 20 et à l'unité de traitement 30.

On va maintenant expliquer comment fonctionne le circuit électrique de cette installation selon ce mode de réalisation, à l'aide de la figure 5. Par défaut, les interrupteurs 62A, 62B, 82A, 82B, 86 sont ouverts.

On mesure également dans le circuit décrit ci-dessus en temps réel les courants de décharge admissibles en sortie de chacun des modules de batteries.

On commence dans le procédé 200 par déterminer quel module de batterie est celui qui contient le plus d'énergie disponible. On effectue cette étape en comparant, lors d'une étape 201, les intensités de décharge I_{72A}, I_{72B} en sortie de chacun des modules de batterie 56A, 56B. Cette opération est effectuée à l'aide des moyens de mesure 72A, 72B. En fonction du résultat de cette étape de comparaison 201, on commande, lors d'une étape respective 203, 205, la fermeture de l'interrupteur 58A, 58B en sortie du module de batterie 56A, 56B qui comprend le plus d'énergie disponible à savoir qui a l'intensité de décharge la plus élevée. Le module de batterie associé à l'interrupteur fermé passe alors en mode « décharge » et est dédié à l'alimentation des éléments alors que l'autre module reste en mode « charge » et stocke l'énergie produite par les panneaux photovoltaïques 16.

On détermine ensuite, lors d'une étape 202, à l'aide d'un module de calcul 92 en communication avec les moyens de mesure, le niveau de charge et l'énergie disponible E₅₆ dans les deux modules de batterie. On compare ensuite cette donnée E₅₆ à une valeur de seuil E_{S56} lors d'une étape 204. On commande ensuite notamment en fonction de cette donnée les différents interrupteurs. Les moyens de commande 66A, 66B, 68A, 68B, 88A, 88B, 90 sont en effet en communication avec le module de calcul. Si on détermine qu'il subsiste une énergie suffisante dans l'ensemble des deux modules de batteries, les interrupteurs 62A, 62B sont fermés, lors d'une étape 206, tandis que l'interrupteur 58A, 58B déterminé reste fermé et les interrupteurs 84A, 84B, 86 relatifs au réseau restent ouverts de sorte que le réseau est déconnecté de l'installation. Cette opération n'est pas obligatoire, les modules de batterie en charge et décharge au démarrage de l'installation pouvant être toujours les mêmes ou choisis pour inverser les rôles à chaque démarrage.

Lorsque le paramètre relatif à l'énergie stockée dans l'ensemble des deux batteries passe en dessous de cette valeur de seuil E_{S56}, on obtient les mesures d'intensité I_{76A} et I_{76B} des moyens 76A, 76B pour compare déterminer quels éléments parmi 20, 30 consomme le plus d'énergie lors d'une étape 208. On commande ensuite l'ouverture de l'interrupteur 62A, 62B de la branche qui consomme le plus d'énergie en fonction du résultat de la comparaison, lors d'étapes 210 ou 212 respectivement. On pourrait alternativement, sans mesurer l'intensité dans les deux branches automatiquement commander la déconnexion d'un interrupteur jugé non prioritaire, notamment le 62A.

On peut ensuite attendre un certain temps T pour laisser éventuellement le temps au module de batterie de se recharger. Si au bout de ce temps (par exemple, 1 heure), on compare à nouveau l'énergie stockée E₅₆ dans l'ensemble des deux modules de batterie (obtenue à l'aide des moyens de mesure 72A et 72B) à la valeur de seuil E_{S56}, lors d'étapes respectives 214 et 216. Si l'énergie disponible dans l'ensemble des deux modules de batteries n'est encore pas suffisante, les moyens de commande 68A, 68B commandent l'ouverture de l'autre interrupteur 62A, 62B encore fermé lors d'une étape respective 218, 220. On attend là encore une période T avant de vérifier à nouveau si l'énergie disponible E₅₆ est supérieure à l'énergie de seuil E_{S56}. Si ce n'est pas le cas, les interrupteurs 62A, 62B restent ouverts. Dans le cas, contraire, on referme les deux interrupteurs.

On pourrait également considérer que si le paramètre E₅₆ est inférieur à une deuxième valeur de seuil dite valeur critique E_{C56} inférieure à la valeur de seuil E_{S56} (étape optionnelle 207), on commande la connexion du réseau électrique à l'installation et la fermeture des interrupteurs 84A, 84B, 86, de même que les interrupteurs 62A, 62B. Les interrupteurs 58A et 58B sont alors ouverts, pour garantir une charge optimale des modules de batteries, lors du groupe d'étape optionnel 209. On compare à nouveau, après une période d'attente T, l'énergie disponible E₅₆ avec la valeur critique. Si l'énergie disponible est repassée au-dessus de la valeur critique, on réinitialise le procédé. Dans le cas contraire, on laisse le circuit en l'état le temps d'une nouvelle période T.

Bien entendu, on a décrit seulement deux modes de réalisation de l'installation et du procédé de fonctionnement associé. Il en existe bien d'autres. L'installation pourrait par exemple comprendre en combinaison un unique module de batterie et une connexion à un réseau d'électricité. Elle pourrait également comprendre une pluralité de modules de batterie formant un seul réseau ou plusieurs réseaux indépendants et couplés avec un réseau de distribution d'électricité.

Le circuit électrique de l'installation n'est bien entendu pas non plus limité à ce qui a été décrit ci-dessus. Le nombre de chargeurs, panneaux ou modules de batterie n'est pas limité à ce qui a été décrit. De même, le nombre et la nature des éléments à alimenter n'est pas limité à ce qui a été décrit. Les connexions électriques peuvent également être différentes de ce qui a été décrit : par exemple, dans le cas où le circuit électrique comprend deux modules de batterie en parallèle, chaque batterie peut être connectée à un élément à alimenter en particulier. Deux batteries peuvent également être connectées à un même onduleur même s'il est alors préférable de leur imposer de fonctionner en alternance.

Le procédé n'est pas non plus limité à ce qui a été décrit. Les étapes pourraient être effectuées dans un ordre différent, les valeurs de seuils pourraient également être différentes ainsi que les paramètres mesurés. D'autres valeurs et d'autres conditions pourraient également être traitées.

On va maintenant décrire rapidement le fonctionnement de la borne de distribution d'électricité.

Comme on l'a indiqué, la borne de distribution d'électricité comprend différents moyens de connexion 22 pour brancher des appareils externes. Au repos, l'interrupteur 62A, ou les interrupteurs 62, 64 sont ouverts, à savoir que la borne est déconnectée du circuit. Lorsqu'un utilisateur souhaite se connecter à la borne, celle-ci lui demande de s'identifier, en présentant un moyen d'identification (carte magnétique, RFID ou à code-barres) et éventuellement en saisissant un code d'identification. S'il est identifié correctement, la borne donne à l'utilisateur l'autorisation de connecter un appareil externe. Si ce n'est pas le cas, elle lui demande de payer, notamment en insérant sa carte dans le module de paiement. Une fois la carte présentée, l'autorisation de prélever de l'électricité est délivrée à l'utilisateur. Si la carte n'est pas présentée ou pas valable, le procédé se termine ici.

Si l'autorisation est obtenue, la borne communique avec les moyens de type moyens de calcul 92 de l'installation pour vérifier le paramètre relatif à l'énergie des batteries et mesuré à l'aide des moyens 72, 72A, 72B. Si le paramètre est inférieur à la valeur de seuil, on indique à l'utilisateur qu'il a été bien identifié mais qu'il n'est pas possible à l'heure actuelle de prélever de l'électricité. S'il est en revanche supérieur à la valeur de seuil, la borne commande les moyens de verrouillage du clapet 24 d'un des moyens de connexion afin que l'utilisateur puisse insérer la prise de courant relative à son appareil, et de préférence son appareil dans le logement.

Lorsque la borne détecte la connexion de la prise de l'appareil externe dans les moyens de connexion, toutes les conditions sont enfin réunies et elle commande les moyens de commande 68, 68A pour fermer l'interrupteur 62, 62A et connecter la borne à l'installation.

Les moyens de verrouillage magnétique du clapet sont alors refermés afin d'éviter que l'appareil situé à l'intérieur du logement et les moyens de connexion soient accessibles à des tiers. Pour récupérer son appareil, l'utilisateur peut à nouveau s'identifier ou présenter sa carte bancaire et la borne permettre l'ouverture du clapet en désactivant les moyens de verrouillage magnétique. La délivrance de courant peut être arrêtée lorsqu'un compteur indique que l'énergie pour laquelle le paiement a été effectué est consommée.

Evidemment, la borne n'est pas limitée à ce qui a été décrit. Elle peut notamment ne présenter aucune des sécurités et des moyens d'identification ou de paiement présentés ou seulement une partie de ceux-ci.

On notera également que l'accès à la borne de distribution d'eau 38 peut également être géré comme l'accès à la borne de distribution d'électricité.

La description de l'invention telle qu'effectuée ci-dessus a évidemment été effectuée uniquement à titre d'exemple et n'exclut aucune variante entrant dans le cadre des revendications présentées ci-après.

## Revendications

1. Installation (10) apte à être électriquement autonome comportant des éléments à alimenter (12, 20, 30) parmi lesquels :
- un bâtiment (12) comportant au moins une pièce délimitée par au moins un mur et un toit (14), et
- des moyens de connexion (22) pour la connexion d'au moins un appareil électrique addtionnel,
l'installation comprenant des moyens d'alimentation des éléments comportant :
- des moyens de génération d'énergie (16) à partir d'une source naturelle, comprenant des panneaux photovoltaïques,
- des moyens de stockage d'énergie (56 ; 56A, 56B),
- des moyens d'interconnexion (58, 62, 64 ; 58A, 58B, 62A, 62B) des moyens de stockage et/ou des moyens de génération aux éléments à alimenter,
l'installation comprenant également:
- une borne de distribution d'électricité (20), située à l'extérieur du bâtiment et comprenant les moyens de connexion (22) pour la connexion dudit au moins un appareil électrique additionnel, lequel est un appareil électrique externe,
- des moyens de mesure (72 ; 72A, 72B) d'au moins un paramètre (I₇₂ ; I_{72A}, I_{72B}) relatif à l'énergie stockée dans au moins une partie des moyens de stockage d'énergie, et
- des moyens de commande (66, 68, 67 ; 66A, 66B, 68A, 68B) des moyens d'interconnexion en fonction des valeurs obtenues par les moyens de mesure, de sorte que si l'énergie stockée dans la au moins une partie des moyens de stockage est inférieure à une valeur de seuil, on interdit l'alimentation électrique d'au moins l'un des éléments (20, 30) autre que le bâtiment,
- - un chargeur (50) comprenant un convertisseur de courant continu (52) placé en aval des moyens de génération d'énergie (16),
- et en ce que l'installation comprend, en sortie du chargeur (50), deux branches électriques en parallèle, une première branche comprenant un premier onduleur (54) adapté pour transformer en alternatif l'énergie électrique produite par les moyens de génération d'énergie (16) et en aval duquel sont connectés en parallèle le bâtiment (12) et la borne de distribution d'électricité (20), et une deuxième branche qui comprend les moyens de stockage d'énergie (56) et en aval de ces moyens de stockage d'énergie (56) un interrupteur (58) et un deuxième onduleur (60) formé d'un convertisseur courant continu/alternatif (54, 60 ; 54A, 54B, 60A, 60B) placé entre les moyens de stockage d'énergie (56 ; 56A, 56B) et d'une part le bâtiment (12) et d'autre part la borne de distribution d'électricité (20).

2. Installation selon la revendication précédente, dans laquelle les moyens de stockage d'énergie comprennent une pluralité d'ensembles de stockage d'énergie (56A, 56B) en parallèle, les moyens de mesure (72A, 72B) étant apte à mesurer un paramètre relatif à l'énergie stockée dans chaque ensemble de stockage, l'installation comportant notamment des moyens de détermination (92) de l'énergie stockée dans une pluralité ou la totalité des ensembles.

3. Installation selon l'une quelconque des revendications précédentes, comprenant une pluralité de sous-installations (10A; 10B), chaque sous installation comprenant un sous-groupe distinct de moyens de génération d'énergie et le cas échéant de moyens de stockage d'énergie(56A ; 56B), chaque sous-installation étant reliée électriquement à au moins un élément ou une portion d'élément (12A; 12B) que n'alimente pas au moins une autre sous-installation.

4. Installation selon la revendication précédente, dans laquelle au moins deux sous-installations (10A ; 10B) sont chacune reliées électriquement à une portion distincte du bâtiment (12A ; 12B), l'une au moins des sous-installations étant également reliée à au moins un autre élément à alimenter (20) outre le bâtiment, ladite sous-installation comprenant :
- des moyens d'interconnexion (58A, 58B, 62A, 62B) des moyens de stockage et/ou des moyens de génération de ladite sous-installation aux éléments à alimenter (12A, 12B, 20) ;
- des moyens de mesure (72A, 72B) d'au moins un paramètre relatif à l'énergie stockée dans les moyens de stockage d'énergie de ladite sous-installation, et
- des moyens de commande (66A, 66B, 68A, 68B) des moyens d'interconnexion en fonction des valeurs obtenues par les moyens de mesure, de sorte que si l'énergie stockée dans les moyens de stockage de ladite sous-installation est inférieure à une valeur de seuil, on interdit l'alimentation électrique d'au moins l'un des éléments (20, 30) relié à ladite sous-installation autre que le bâtiment.

5. Installation selon la revendication précédente, dans laquelle au moins un moyen d'interconnexion de sécurité (75) est configuré pour que lorsqu'il est activé, l'énergie provenant des moyens de génération d'une première sous-installation alimente l'élément ou la portion d'élément propre à une deuxième sous-installation.

6. Installation selon l'une quelconque des revendications précédentes, comprenant une pluralité d'éléments (20, 30) à alimenter outre le bâtiment (12), des moyens de mesure (76A, 76B) d'au moins un paramètre (I_{76A}, I_{76B}) relatif à la puissance demandée par chacun de ces éléments à alimenter, et des moyens de détermination (92) de l'élément parmi les éléments autres que le bâtiment dont on interdit l'alimentation en fonction des valeurs obtenues par lesdits moyens de mesure.

7. Installation selon l'une des revendications 1 à 6, dans laquelle la surface des panneaux photovoltaïques (16) et notamment du toit (14) est supérieure à 100m² et peut fournir plus de 60kwh en une journée d'ensoleillement pour que les panneaux photovoltaïques puissent alimenter le bâtiment (12) en électricité sans interruption pendant 24 heures.

8. Installation selon l'une des revendications précédentes comprenant de moyens d'interconnexion (64) constitués par un interrupteur placé entre le premier onduleur (54) et la borne de distribution d'électricité (20) et des moyens d'interconnexion (62) constitués par un deuxième interrupteur placé entre le deuxième onduleur (60) et la borne de distribution d'électricité (20).

9. Installation selon l'une quelconque des revendications précédentes, dans laquelle les moyens de génération d'énergie (16) sont reliés à la fois aux moyens de stockage d'énergie (56 ; 56A, 56B) et directement à au moins l'un des éléments à alimenter (12, 20 ; 12A, 12B, 20) et notamment au bâtiment.

10. Installation selon l'une quelconque des revendications précédentes, également reliée à un moyen d'alimentation de secours, tel qu'un groupe électrogène ou un réseau de distribution d'électricité (80), destiné à alimenter au moins l'un des éléments et/ou au moins partiellement les moyens de stockage d'énergie.

11. Installation selon l'une quelconque des revendications précédentes, dans laquelle la borne de distribution d'électricité (20) comprend un moyen de détection de connexion de la présence d'un appareil électrique aux moyens de connexion (22) de la borne, et des moyens de commande (66, 67, 68 ; 66A, 66B, 68A) des moyens d'interconnexion (58, 62, 64 ; 58A, 58B, 62A) interposés entre la borne et les moyens de stockage d'énergie en fonction des moyens de détection.

12. Installation selon l'une quelconque des revendications précédentes, dans laquelle la borne comprend un module d'identification (28A) et/ou un module de paiement (28B).

13. Installation selon la revendication précédente, les moyens de commande (67, 68 ; 68A) commandant les moyens d'interconnexion (62, 64 ; 62A) interposés entre la borne et les moyens de stockage d'énergie en fonction des modules d'identification et/ou de paiement.

14. Installation selon l'une quelconque des revendications 12 et 13, dans laquelle la borne comprend des moyens d'accès (24) mobiles entre une position de fermeture permettant d'obturer l'accès aux moyens de connexion (22), et une position d'ouverture permettant de libérer l'accès aux moyens de connexion, et des moyens de commande des moyens d'accès en fonction du module d'identification et/ou du module de paiement.

15. Installation selon l'une quelconque des revendications 11 à 14, comprenant des moyens de commande (67, 68 ; 68A) des moyens d'interconnexion (62, 64 ; 62A) ou d'accès relativement à au moins un moyen de connexion (22) de la borne en fonction du paramètre relatif à l'énergie disponible dans au moins une partie des moyens de stockage d'énergie.

16. Installation selon l'une quelconque des revendications précédentes, dans laquelle un autre élément à alimenter de l'installation est une unité de traitement d'eau (30) tel qu'un élément de purification d'eau et/ou de désalinisation d'eau de mer.

17. Installation selon la revendication précédente, dans laquelle l'élément de traitement d'eau comprend un canal de sortie de fluide (34, 36) connecté au bâtiment (12) et est destiné à alimenter ce dernier en eau et/ou est relié à une borne de distribution de liquide (38) située à l'extérieur du bâtiment et comprenant des moyens de sortie de liquide tels qu'un robinet (39).

18. Installation selon la revendication précédente, dans laquelle la borne de distribution de liquide comprend un module d'identification et/ou un module de paiement et éventuellement des moyens d'accès mobiles entre une position de fermeture permettant d'obturer l'accès aux moyens de sortie, et une position d'ouverture permettant de libérer l'accès aux moyens de sortie, et des moyens de commande des moyens d'accès en fonction du module d'identification et/ou du module de paiement.

19. Installation selon les revendications 17 ou 18, comprenant des moyens d'ouverture et de fermeture (40) d'au moins un canal de fluide (34), telle qu'au moins une valve, et des moyens de commande des moyens d'ouverture et de fermeture en fonction d'au moins un paramètre, de sorte que seul le bâtiment soit alimenté en eau lorsque la valeur du paramètre est hors d'une certaine fourchette de valeurs de seuil.

20. Procédé (100 ; 200) de gestion d'une installation (10) conforme à l'une des revendications 1 à 19 apte à être électriquement autonome comportant des éléments à alimenter (12, 20, 30) parmi lesquels :
- un bâtiment (12) comportant au moins une pièce délimitée par au moins un mur et un toit, et
- des moyens de connexion pour la connexion d'au moins un appareil électrique additionnel,
l'installation comprenant des moyens d'alimentation des éléments comportant :
- des moyens de génération d'énergie à partir d'une source naturelle (16), comprenant des panneaux photovoltaïques,
- des moyens de stockage d'énergie (56 ; 56A, 56B),
- des moyens d'interconnexion (58, 62, 64 ; 58A, 58B, 62A, 62B) des moyens de stockage et/ou des moyens de génération aux éléments à alimenter,
**caractérisé en ce que** le procédé comprend les étapes suivantes :
- on mesure au moins un paramètre relatif à l'énergie disponible dans au moins une partie des moyens de stockage d'énergie, et on commande (120, 122 ; 210, 212, 218, 220) les moyens d'interconnexion (58, 62, 64; 58A, 58B, 62A, 62B) en fonction des valeurs mesurées, de sorte que si l'énergie disponible dans au moins une partie des moyens de stockage est inférieure à une valeur de seuil, on interdit l'alimentation d'au moins l'un des éléments autre que le bâtiment,
- le procédé comprenant en outre les étapes consistant à relier ledit au moins un appareil électrique additionnel, lequel est un appareil électrique externe, à une borne de distribution d'électricité située à l'extérieur du bâtiment et qui comprend les moyens de connexion pour la connexion d'au moins un appareil électrique externe, et à relier entre elles deux branches en sortie d'un chargeur (50) comprenant lui-même un convertisseur de courant continu (52) placé en aval des moyens de génération d'énergie (16) : une première branche comprenant un premier onduleur (54) adapté pour transformer en alternatif l'énergie électrique produite par les moyens de génération d'énergie (16) et en aval duquel sont connectés en parallèle le bâtiment (12) et la borne de distribution d'électricité (20), et une deuxième branche qui comprend les moyens de stockage d'énergie (56) et en aval de ces moyens de stockage d'énergie (56) un interrupteur (58) et un deuxième onduleur (60) formé d'un convertisseur courant continu/alternatif (54, 60 ; 54A, 54B, 60A, 60B) placé entre les moyens de stockage d'énergie (56 ; 56A, 56B) et d'une part le bâtiment (12) et d'autre part la borne de distribution d'électricité (20).

## Patentansprüche

1. Anlage (10), die elektrisch autonom sein kann, umfassend zu versorgende Elemente (12, 20, 30), darunter:
- ein Gebäude (12) mit zumindest einem Raum, der durch zumindest eine Wand und ein Dach (14) begrenzt ist, und
- Verbindungsmittel (22) zum Anschluss zumindest eines zusätzlichen elektrischen Geräts,
wobei die Anlage Mittel zur Versorgung der Elemente aufweist, die Folgendes umfassen:
- Mittel zum Erzeugen von Energie (16) ausgehend von einer natürlichen Quelle einschließlich Photovoltaikmodulen,
- Mittel zum Speichern von Energie (56; 56A, 56B),
- Verbindungsmittel (58, 62, 64; 58A, 58B, 62A, 62B) der Speichermittel und/oder der Erzeugungsmittel mit den zu versorgenden Elementen,
wobei die Anlage auch Folgendes umfasst:
- einen Stromverteilungsanschluss (20), der sich außerhalb des Gebäudes befindet und die Verbindungsmittel (22) für den Anschluss des zumindest einen zusätzlichen elektrischen Geräts umfasst, das ein externes elektrisches Gerät ist,
- Mittel zur Messung (72; 72A, 72B) zumindest eines Parameters (I₇₂; I_{72A}, I_{72B}) relativ zur in zumindest einem Teil der Energiespeichermittel gespeicherten Energie, und
- Mittel zur Steuerung (66, 68, 67; 66A, 66B, 68A, 68B) der Verbindungsmittel gemäß den durch die Messmittel erhaltenen Werten, so dass, wenn die in dem zumindest einen Teil der Speichermittel gespeicherte Energie kleiner als ein Schwellenwert ist, die Energieversorgung zumindest eines der anderen Elemente (20, 30) außer dem Gebäude unterbunden ist,
- ein Ladegerät (50), das einen Gleichstrom-Wechselstrom-Wandler (52) umfasst, der den Energieerzeugungsmitteln (16) nachgeschaltet ist,
- und dadurch, dass die Anlage am Ausgang des Ladegeräts (50) zwei parallele elektrische Leitungen umfasst, wobei eine erste Leitung einen ersten Wechselrichter (54) umfasst, der geeignet ist, die von den Energieerzeugungsmitteln (16) erzeugte elektrische Energie in Wechselstrom umzuwandeln, und dem das Gebäude (12) und der Stromverteilungsanschluss (20) parallel nachgeschaltet sind, und eine zweite Leitung, die die Energiespeichermittel (56) und diesen Energiespeichermitteln (56) nachgeschaltet einen Schalter (58) und einen zweiten Wechselrichter (60) umfasst, die durch einen Gleich-/Wechselstromwandler (54, 60; 54A, 54B, 60A, 60B) gebildet werden, die zwischen den Energiespeichermitteln (56; 56A, 56B) und einerseits dem Gebäude (12) und andererseits dem Stromverteilungsanschluss (20) angeordnet sind.

2. Anlage nach dem vorstehenden Anspruch, wobei die Energiespeichermittel eine Mehrzahl von parallel Energiespeichereinheiten (56A, 56B) umfasst, wobei die Messmittel (72A, 72B) geeignet sind, einen Parameter relativ zur in jeder Speichereinheit gespeicherten Energie zu messen, wobei die Anlage insbesondere Mittel zur Bestimmung (92) der in einer Mehrzahl oder allen Einheiten gespeicherten Energie umfasst.

3. Anlage nach einem der vorstehenden Ansprüche, umfassend eine Mehrzahl von Unteranlagen (10A; 10B), wobei jede Unteranlage eine separate Untergruppe von Energieerzeugungsmitteln und gegebenenfalls Energiespeichermitteln (56A; 56B) umfasst, wobei jede Unteranlage elektrisch mit zumindest einem Element oder Abschnitt eines Elements (12A; 12B) verbunden ist, das nicht von zumindest einer anderen Unteranlage versorgt wird.

4. Anlage nach dem vorstehenden Anspruch, wobei zumindest zwei Unteranlagen (10A; 10B) jeweils elektrisch mit einem separaten Abschnitt des Gebäudes (12A; 12B) verbunden sind, wobei zumindest eine der Unteranlagen auch mit zumindest einem anderen Element verbunden ist, das zusätzlich zum Gebäude zu versorgen ist (20), wobei die Unteranlage Folgendes umfasst:
- Verbindungsmittel (58A, 58B, 62A, 62B) der Speichermittel und/oder der Mittel zum Erzeugen der Unteranlage an die zu versorgenden Elemente (12A, 12B, 20) ;
- Mittel (72A, 72B) zum Messen zumindest eines Parameters relativ zur in den Energiespeichermitteln der Unteranlage gespeicherten Energie, und
- Mittel (66A, 66B, 68A, 68B) zum Steuern der Verbindungsmittel gemäß den durch die Messmittel erhaltenen Werten, so dass, wenn die in den Speichermitteln der Unteranlage gespeicherte Energie kleiner als ein Schwellenwert ist, die Stromversorgung von zumindest einem der Elemente (20, 30), die mit der Unteranlage außer dem Gebäude verbunden sind, unterbunden wird.

5. Anlage nach dem vorstehenden Anspruch, wobei zumindest ein Sicherheitsverbindungsmittel (75) so konfiguriert ist, dass bei seiner Aktivierung die aus dem Erzeugungsmittel einer ersten Unteranlage kommende Energie das Element oder den Abschnitt eines Elements einer zweiten Unteranlage versorgt.

6. Anlage nach einem der vorstehenden Ansprüche, umfassend eine Mehrzahl von Elementen (20, 30), die zusätzlich zum Gebäude (12) zu versorgen sind, Mittel (76A, 76B) zum Messen zumindest eines Parameters (I_{76A}, I_{76B}), relativ zur von jedem dieser zu versorgenden Elemente benötigten Leistung, und Mittel (92) zum Bestimmen des Elements unter den anderen Elementen außer dem Gebäude, deren Versorgung gemäß den durch die Messmittel erhaltenen Werten unterbunden ist.

7. Anlage nach einem der Ansprüche 1 bis 6, wobei die Fläche der Photovoltaikmodule (16) und insbesondere des Daches (14) größer als 100 m² ist und an einem Sonnentag mehr als 60 kWh liefern kann, so dass die Photovoltaikmodule das Gebäude (12) 24 Stunden lang ohne Unterbrechung mit Strom versorgen können.

8. Anlage nach einem der vorstehenden Ansprüche, umfassend Verbindungsmittel (64) bestehend aus einem Schalter, der zwischen dem ersten Wechselrichter (54) und dem Stromverteilungsanschluss (20) angeordnet ist, und Verbindungsmittel (62) bestehend aus einem zweiten Schalter, der zwischen dem zweiten Wechselrichter (60) und dem Stromverteilungsanschluss (20) angeordnet ist.

9. Anlage nach einem der vorstehenden Ansprüche, wobei die Energieerzeugungsmittel (16) sowohl mit den Energiespeichermitteln (56; 56A, 56B), als auch direkt mit zumindest einem der zu versorgenden Elemente (12, 20; 12A, 12B, 20) und insbesondere mit dem Gebäude verbunden sind.

10. Anlage nach einem der vorstehenden Ansprüche, die auch mit einem Mittel der Notstromversorgung, wie beispielsweise einem Generator oder einem Stromverteilungsnetz (80), verbunden und dazu bestimmt ist, zumindest eines der Elemente und/oder zumindest teilweise die Energiespeichermittel zu versorgen.

11. Anlage nach einem der vorstehenden Ansprüche, wobei der Stromverteilungsanschluss (20) Mittel zum Erkennen der vorhandenen Verbindung einer elektrischen Vorrichtung mit den Verbindungsmitteln (22) des Anschlusses und Mittel (66, 67, 68; 66A, 66B, 68A) zum Steuern der Verbindungsmittel (58, 62, 64; 58A, 58B, 62A) umfasst, die zwischen dem Anschluss und den Energiespeichermitteln gemäß den Erkennungsmitteln angeordnet sind.

12. Anlage nach einem der vorstehenden Ansprüche, wobei der Anschluss ein Identifikationsmodul (28A) und/oder ein Zahlungsmodul (28B) umfasst.

13. Anlage nach dem vorstehenden Anspruch, wobei die Steuermittel (67, 68; 68A) die Verbindungsmittel (62, 64; 62A) steuern, die zwischen dem Anschluss und den Energiespeichermitteln gemäß den Identifikations- und/oder Zahlungsmodulen angeordnet sind.

14. Anlage nach einem der Ansprüche 12 und 13, wobei der Anschluss Zugangsmittel (24) umfasst, die zwischen einer geschlossenen Position zum Sperren des Zugangs zu den Verbindungsmitteln (22), und einer offenen Position zum Freigeben des Zugangs zu den Verbindungsmitteln beweglich sind, und Mittel zum Steuern der Zugangsmittel gemäß dem Identifikationsmodul und/oder dem Zahlungsmodul.

15. Anlage nach einem der Ansprüche 11 bis 14, umfassend Mittel zum Steuern (67, 68; 68A) der Verbindungsmittel (62, 64; 62A) oder Zugangsmittel relativ zu zumindest einem Verbindungsmittel (22) des Anschlusses gemäß dem Parameter relativ zur in zumindest einem Teil der Energiespeichermittel verfügbaren Energie.

16. Anlage nach einem der vorstehenden Ansprüche, wobei ein anderes zu versorgendes Element der Anlage eine Wasseraufbereitungseinheit (30) ist, wie beispielsweise ein Wasserreinigungs- und/oder Meerwasserentsalzungselement.

17. Anlage nach dem vorstehenden Anspruch, wobei das Wasseraufbereitungselement einen mit dem Gebäude (12) verbundenen Fluidauslasskanal (34, 36) umfasst, der dazu bestimmt ist, das Gebäude (12) mit Wasser zu versorgen und/oder mit einem außerhalb des Gebäudes befindlichen Flüssigkeitsverteileranschluss (38) verbunden ist, der Flüssigkeitsauslassmittel wie einen Hahn (39) umfasst.

18. Anlage nach dem vorstehenden Anspruch, wobei der Flüssigkeitsverteileranschluss ein Identifikationsmodul und/oder ein Zahlungsmodul und eventuell mobile Zugangsmittel zwischen einer geschlossenen Position zum Sperren des Zugangs zu den Auslassmitteln, und einer offenen Position für die Freigabe des Zugangs zu den Auslassmitteln, und Mittel zum Steuern der Zugangsmittel gemäß dem Identifikationsmodul und/oder dem Zahlungsmodul umfasst.

19. Anlage nach der Ansprüche 17 oder 18, umfassend Mittel zum Öffnen und Schließen (40) zumindest eines Fluidkanals (34), wie zumindest ein Ventil, und Mittel zum Steuern der Öffnungs- und Schließmittel gemäß von zumindest einem Parameter, so dass nur das Gebäude mit Wasser versorgt wird, wenn der Wert des Parameters außerhalb eines bestimmten Schwellenwertbereichs liegt.

20. Verfahren (100; 200) zum Verwalten einer Anlage (10) nach einem der Ansprüche 1 bis 19, die elektrisch autonom sein kann, und die zu versorgende Elemente (12, 20, 30) umfasst, darunter:
- ein Gebäude (12) mit zumindest einem Raum, der durch zumindest eine Wand und ein Dach begrenzt ist, und
- Verbindungsmittel zum Anschluss zumindest eines zusätzlichen elektrischen Geräts,
wobei die Anlage Mittel zur Versorgung der Elemente aufweist, die Folgendes umfassen:
- Mittel zum Erzeugen von Energie ausgehend von einer natürlichen Quelle (16) einschließlich Photovoltaikmodulen,
- Mittel zum Speichern von Energie (56; 56A, 56B),
- Verbindungsmittel (58, 62, 64; 58A, 58B, 62A, 62B) der Speichermittel und/oder der Erzeugungsmittel mit den zu versorgenden Elementen,
**dadurch gekennzeichnet, dass** das Verfahren die folgenden Schritte umfasst:
- zumindest ein Parameter relativ zur in zumindest einem Teil der Energiespeichermittel verfügbaren Energie gemessen wird, und die Verbindungsmittel (58, 62, 64; 58A, 58B, 62A, 62B) gemäß den Messwerten gesteuert werden so dass, wenn die in zumindest einem Teil der Speichermittel verfügbare Energie kleiner als ein Schwellenwert ist, die Versorgung zumindest eines der anderen Elemente außer dem Gebäude unterbunden wird,
- wobei das Verfahren ferner die folgenden Schritte umfasst: Verbinden des zumindest einen zusätzlichen elektrischen Geräts, das ein externes elektrisches Gerät ist, mit einem Stromverteilungsanschluss, der sich außerhalb des Gebäudes befindet, und der die Verbindungsmittel für den Anschluss zumindest eines externen elektrischen Geräts umfasst, und Verbinden zweier Leitungen am Ausgang eines Ladegeräts (50) miteinander, das selbst einen Gleichstrom-Wechselstrom-Wandler (52) umfasst, der den Energieerzeugungsmitteln (16) nachgeschaltet ist: wobei eine erste Leitung einen ersten Wechselrichter (54) umfasst, der geeignet ist, die von den Energieerzeugungsmitteln (16) erzeugte elektrische Energie in Wechselstrom umzuwandeln, und dem das Gebäude (12) und der Stromverteilungsanschluss (20) parallel nachgeschaltet sind, und eine zweite Leitung, die die Energiespeichermittel (56) und diesen Energiespeichermitteln (56) nachgeschaltet einen Schalter (58) und einen zweiten Wechselrichter (60) umfasst, die durch einen Gleich-/Wechselstromwandler (54, 60; 54A, 54B, 60A, 60B) gebildet werden, die zwischen den Energiespeichermitteln (56; 56A, 56B) und einerseits dem Gebäude (12) und andererseits dem Stromverteilungsanschluss (20) angeordnet sind.

## Claims

1. An installation (10) capable of being electrically autonomous comprising elements to be powered (12, 20, 30) including:
- a building (12) comprising at least one room delimited by at least one wall and a roof (14), and
- connection means (22) for the connection of at least one additional electrical device,
the installation including means for powering the elements comprising:
- means for generating energy (16) from a natural source, including photovoltaic panels,
- means for storing energy (56; 56A, 56B),
- means for interconnecting (58, 62, 64; 58A, 58B, 62A, 62B) the storage means and/or the generation means to the elements to be powered,
the installation also including:
- an electricity distribution terminal (20), located outside the building and including the connection means (22) for the connection of said at least one additional electrical device, which is an external electrical device,
- means for measuring (72; 72A, 72B) at least one parameter (I₇₂; I_{72A}, I_{72B}) relating to the energy stored in at least one part of the energy storage means, and
- means for controlling (66, 68, 67; 66A, 66B, 68A, 68B) the interconnection means depending on the values obtained by the measuring means, so that if the energy stored in the at least one part of the storage means is less than a threshold value, the electrical power supply of at least one of the elements (20, 30) other than the building is prohibited,
- a charger (50) including a DC converter (52) placed downstream of the energy generation means (16),
- and in that the installation includes, at the output of the charger (50), two electrical branches in parallel, a first branch including a first inverter (54) suitable for transforming into alternating current the electric energy produced by the energy generation means (16) and downstream whereof the building (12) and the electricity distribution terminal (20) are connected in parallel, and a second branch which includes the energy storage means (56) and downstream of these energy storage means (56) a switch (58) and a second inverter (60) formed by a DC/AC current converter (54, 60; 54A, 54B, 60A, 60B) placed between the energy storage means (56; 56A, 56B) and on the one hand the building (12) and on the other the electricity distribution terminal (20).

2. The installation according to the preceding claim, wherein the energy storage means include a plurality of energy storage assemblies (56A, 56B) in parallel, the measuring means (72A, 72B) being capable of measuring a parameter relating to the energy stored in each storage assembly, the installation notably comprising means for determining (92) the energy stored in a plurality or the totality of the assemblies.

3. The installation according to any one of the preceding claims, including a plurality of sub-installations (10A; 10B), each sub-installation including a distinct sub-group of energy generation means and when appropriate energy storage means (56A; 56B), each sub-installation being electrically connected to at least one element or one portion of element (12A; 12B) that is not powered by at least one other sub-installation.

4. The installation according to the preceding claim, wherein at least two sub-installations (10A; 10B) are each electrically connected to a distinct portion of the building (12A; 12B), at least one of the sub-installations also being connected to at least one other element to be powered (20) other than the building, said sub-installation including:
- means for interconnecting (58A, 58B, 62A, 62B) the storage means and/or the generation means of said sub-installation to the elements to be powered (12A, 12B, 20);
- means for measuring (72A, 72B) at least one parameter relating to the energy stored in the energy storage means of said sub-installation, and
- means for controlling (66A, 66B, 68A, 68B) the interconnection means depending on the values obtained by the measuring means, so that if the energy stored in the storage means of said sub-installation is less than a threshold value, the electrical power supply of at least one of the elements (20, 30) connected to said sub-installation other than the building, is prohibited.

5. The installation according to the preceding claim, wherein at least one safety interconnection means (75) is configured so that when it is activated, the energy coming from the generation means of a first sub-installation powers the element or the portion of element belonging to a second sub-installation.

6. The installation according to any one of the preceding claims, including a plurality of elements (20, 30) to be powered other than the building (12), means for measuring (76A, 76B) at least one parameter (I_{76A}, I_{76B}) relating to the power required by each of these elements to be powered, and means for determining (92) the element among the elements other than the building to which the power supply is prohibited depending on the values obtained by said measuring means.

7. The installation according to one of claims 1 to 6, wherein the surface of the photovoltaic panels (16) and notably of the roof (14) is greater than 100 m² and can supply more than 60 kWh in one day of insolation so that the photovoltaic panels can supply the building (12) with electricity without interruption for 24 hours.

8. The installation according to one of the preceding claims including interconnection means (64) formed by a switch placed between the first inverter (54) and the electricity distribution terminal (20) and interconnection means (62) formed by a second switch placed between the second inverter (60) and the electricity distribution terminal (20).

9. The installation according to any one of the preceding claims, wherein the energy generation means (16) are connected both to the energy storage means (56; 56A, 56B) and directly to at least one of the elements to be powered (12, 20; 12A, 12B, 20) and notably to the building.

10. The installation according to any one of the preceding claims, also connected to an emergency power supply means, such as a generator set or an electricity distribution grid (80), intended for powering at least one of the elements and/or at least partially the energy storage means.

11. The installation according to any one of the preceding claims, wherein the electricity distribution terminal (20) includes a connection detecting means for the presence of an electrical device at the connection means (22) of the terminal, and control means (66, 67, 68; 66A, 66B, 68A) for the interconnection means (58, 62, 64; 58A, 58B, 62A) interposed between the terminal and the energy storage means depending on the detection means.

12. The installation according to any one of the preceding claims, wherein the terminal includes an identification module (28A) and/or a payment module (28B).

13. The installation according to the preceding claim, the control means (67, 68; 68A) controlling the interconnection means (62, 64; 62A) interposed between the terminal and the energy storage means depending on the identification and/or payment modules.

14. The installation according to any one of claims 12 and 13, wherein the terminal includes access means (24) movable between a closed position allowing access to the connection means (22) to be blocked, and an open position allowing free access to the connection means, and means for controlling the access means depending on the identification module and/or the payment module.

15. The installation according to any one of claims 11 to 14, including control means (67, 68; 68A) for the interconnection (62, 64; 62A) or access means relative to at least one connection means (22) of the terminal depending on the parameter relating to the energy available in at least one part of the energy storage means.

16. The installation according to any one of the preceding claims, wherein another element of the installation to be powered is a water treatment unit (30) such as a water purification and/or seawater desalination element.

17. The installation according to the preceding claim, wherein the water treatment element includes a fluid delivery channel (34, 36) connected to the building (12) and is intended to supply the latter with water and/or is connected to a liquid distribution terminal (38) located outside the building and including liquid delivery means such as a faucet (39).

18. The installation according to the preceding claim, wherein the liquid distribution terminal includes an identification module and/or a payment module and optionally access means movable between a closed position allowing access to the delivery means to be blocked, and an open position allowing free access to the delivery means, and means for controlling the access means depending on the identification module and/or the payment module.

19. The installation according to claims 17 or 18, including opening and closing means (40) for at least one fluid channel (34), such as at least one valve, and means for controlling the opening and closing means depending on at least one parameter, so that only the building is supplied with water when the value of the parameter is outside a certain range of threshold values.

20. A method (100; 200) for managing an installation (10) in conformity with one of claims 1 to 19 capable of being electrically autonomous comprising elements to be powered (12, 20, 30) including:
- a building (12) comprising at least one room delimited by at least one wall and a roof, and
- connection means for the connection of at least one additional electrical device,
the installation including means for powering the elements comprising:
- means for generating energy from a natural source (16), including photovoltaic panels,
- means for storing energy (56; 56A, 56B),
- means for interconnecting (58, 62, 64; 58A, 58B, 62A, 62B) the storage means and/or the generation means to the elements to be powered,
**characterized in that** the method includes the following steps:
- measuring at least one parameter relating to the energy available in at least one part of the energy storage means, and ordering (120, 122; 210, 212, 218, 220) the interconnection means (58, 62, 64; 58A, 58B, 62A, 62B) depending on the measured values, so that if the energy available in at least one part of the storage means is less than a threshold value, the power supply of at least one of the elements other than the building is prohibited,
- the method further including the steps consisting in connecting said at least one additional electrical device, which is an external electrical device, to an electricity distribution terminal located outside the building and which includes the connection means for the connection of at least one external electrical device, and connecting between them two branches at the output of a charger (50), itself including a DC current converter (52) placed downstream of the energy generation means (16): a first branch including a first inverter (54) suitable for transforming into alternating current the electric energy produced by the energy generation means (16) and downstream whereof the building (12) and the electricity distribution terminal (20) are connected in parallel, and a second branch which includes the energy storage means (56) and downstream of these energy storage means (56) a switch (58) and a second inverter (60) formed by a DC/AC current converter (54, 60; 54A, 54B, 60A, 60B) placed between the energy storage means (56; 56A, 56B) and on the one hand the building (12) and on the other the electricity distribution terminal (20).
